# NEUE EUROPÄISCHE PATENTSCHRIFT

(11) **EP 1 755 008 B2**
(45) Veröffentlichungstag und Bekanntmachung des Hinweises auf die Entscheidung über den Einspruch: **03.03.2021**
(45) Hinweis auf die Patenterteilung: 18.01.2012
(21) Anmeldenummer: 05017896.1
(22) Anmeldetag: 17.08.2005
(51) Int. Cl.: G05B 19/042, G06F 9/445, G07C 5/08, E01C 19/48

(54) **Baumaschine und Verfahren zum Installieren von Anwendungs-Software in einer Baumaschine**
Construction machine and method for installing application software in a construction machine
Machine de chantier et procédé pour l'installation de logiciels d'application dans une machine de chantier

(43) Veröffentlichungstag der Anmeldung: 21.02.2007
(73) Patentinhaber: Joseph Vögele AG, 67067 Ludwigshafen (DE)
(72) Erfinder: Eul, Achim, 68305 Mannheim (DE)
(74) Vertreter: Grünecker Patent- und Rechtsanwälte PartG mbB

(56) Entgegenhaltungen:
- EP-A- 0 790 353
- EP-A- 1 324 197
- EP-A- 1 533 698
- WO-A-03/055714
- DE-A1-102004 005 266
- US-A- 5 442 553
- US-A1- 2001 036 762
- US-A1- 2004 095 829
- US-A1- 2005 097 541

## Beschreibung

Die Erfindung betrifft einen Straßenfertiger gemäß Oberbegriff des Patentanspruchs 1.

In der Praxis bekannte Straßenfertiger weisen eine elektronische Steuerungsvorrichtung auf, die eine bordeigene Zentralrecheneinheit meist in einem Bedienpult sowie mehrere zentrale oder dezentrale speicherprogrammierbare Steuerungs- und Controllereinheiten, mehrere zentrale oder dezentrale Eingangs-/Ausgangs-Module, Außensteuerstände, eine Motorelektronik, eine Generatorelektronik und diverse Sensorik- und Aktorik-Subsysteme und dgl. umfasst, die direkt oder indirekt über ein Bussystem, z.B. wenigstens einen Feldbus, miteinander verbunden sind. Zum Betreiben des Straßenfertigers wird Anwendungs-Software und werden Maschinenparameter-Grunddaten zumeist im Speicherbereich der Zentralrecheneinheit installiert und gespeichert. Die Maschinenparameter-Grunddaten können für verschiedene Maschinentypen gleich sein. Spezifische Maschinen- oder Einbauparameter-Betriebsdaten, die z. B. nur für einen Maschinentyp installiert werden, haben mit den Grunddaten nur wenig zu tun und werden auf andere Weise eingestellt oder installiert. Bei der Erstinstallation, nach einem Ausfall der Zentralrecheneinheit oder anderer Steuerungseinheiten sowie bei Änderungen der Anwendungs-Software oder der Maschinenparameter-Grunddaten werden die für den Betrieb benötigten Daten mittels eines Laptops über eine Schnittstelle in einem Steuerschrank auf dem Straßenfertiger eingespielt. Diese Prozedur ist kompliziert und erfordert geschultes Servicepersonal. Geschultes Servicepersonal wird auch benötigt, falls die Anwendungs-Software und/oder die Maschinenparameter-Grunddaten geändert oder aktualisiert werden müssen.

Bei dem aus EP 0 790 353 A bekannten Straßenfertiger erfüllen mehrere, gleiche und untereinander auswechselbare Verarbeitungseinheiten Steuer- und/oder Regelungsaufgaben für Aggregate im Einbaubetrieb. Die Verarbeitungseinheiten sind mit spezifischen Schaltkreiselementen und/oder mit spezifischer Software versehen, und sind z.B. Steckkarten, die innerhalb eines BUS-Systems in Steckplätze am Straßenfertiger eingesteckt sind. Sollwerte und Steuerdaten für jeweilige Regelkreise können an einem Bedientableau mit tastenförmigen Bedienelementen eingegeben werden, oder per Diskette oder Datenfernübertragung über eine Schnittstelle eines Rechners.

Bei einem aus US 2005/09 7541 A bekannten Verfahren wird bei der Herstellung von PKWs auf einem Produktionsband in der elektronischen Steuerung jedes Fahrzeugs einmal Software installiert oder aktualisiert. Um nicht an jedes Fahrzeug einen eigenen PC oder Rechner anschließen zu müssen, werden mittels eines PCs oder Rechners mehrere handelübliche USB-Sticks oder USB-Flash-Disks geladen, zu den Fahrzeugen überführt, und dort an einem USB-Port angesteckt, um die Software zu überspielen, und danach wieder abgezogen und erneut am PC angesteckt. Diese Prozedur wird nur bei Bedarf ausgeführt. Der jeweilige Stick oder die Flash-Disk wird gleich wieder abgezogen, da handelsübliche USB-Sticks oder USB-Flash-Disks gröberen Umgebungsbedingungen nicht ausreichend sicher widerstehen.

Aus WO03/055714 A ist ein Militärfahrzeug oder Betonmischer oder ein Schneepflug oder ein Müllfahrzeug bekannt, das im elektronischen Steuerungssystem ein internes Bus-System enthält. Zum Einspielen von Software, zum Aktualisieren und dgl. kann an die Zentralrecheneinheit über einen Link ein PC angeschlossen werden. Mit einem solchen PC sind auch Diagnosen möglich. Der PC wird jedoch nur angeschlossen, wenn Bedarf zum Einspielen oder Aktualisieren bzw. für eine Diagnose vorliegt. Diese Prozeduren sind kompliziert und erfordern geschultes Service-Personal.

Der Erfindung liegt die Aufgabe zugrunde, einen Straßenfertiger anzugeben, um auch unter den groben Arbeits- und Umgebungsbedingungen auf dem Straßenfertiger ein sicheres Installieren und/oder Aktualisieren auch durch wenig geschultes oder ungeschultes Personal zu ermöglichen.

Die gestellte Aufgabe wird mit den Merkmalen des Patentanspruchs 1 gelöst.

Das Installieren oder Aktualisieren zumindest der Anwendungs-Software in der Zentralrecheneinheit kann auch von ungeschultem Personal ohne Zeitverzug bei jedem Systemstart oder durch die Zentralrecheneinheit veranlasst durchgeführt werden, da am oder im Bedienpult wenigstens ein mit der Zentralrecheneinheit verbundener, bidirekter Datenaustauschanschluss vorgesehen und an diesem der baumaschinentauglich ausgebildete Wechseldatenträger angebracht ist, in dem die vollständige Anwendungs-Software und gegebenenfalls die Maschinenparameter-Grunddaten gespeichert sind. Das Überspielen zumindest der Anwendungs-Software, und zweckmäßig auch der Maschinenparameter-Grunddaten, in die Zentralrecheneinheit wird aus dem Wechseldatenträger durchgeführt, der dafür angesteckt ist. Das Übermitteln zumindest der Anwendungs-Software im Steuerungssystem an alle Komponenten, die Anwendungs-Software benötigen, wird von der Zentralrecheneinheit durchgeführt. Diese prüft beispielsweise bei jedem Systemstart, ob auf allen Komponenten die jeweilige korrekte Software-Version vorhanden ist, und lädt, falls erforderlich, die Anwendungs-Software beispielsweise über einen Feldbus in die Komponenten hinein. D.h., in der Zentralrecheneinheit werden sämtliche Anwendungsprogramme vorgehalten, damit z. B. nach Austausch einer Komponente im Servicefall innerhalb des Steuerungssystems diese umgehend wieder die korrekte Software zur Verfügung hat. Ist der Wechseldatenträger beim Systemstart angebracht, dann wird automatisch die sich auf dem Wechseldatenträger befindliche Anwendungs-Software, und werden zweckmäßig auch die Maschinenparameter-Grunddaten, in die Zentralrecheneinheit überspielt. Dies kann jeweils auf Veranlassung der Zentralrecheneinheit bei angebrachtem Wechseldatenträger, wenn immer die Notwendigkeit der Überspielung oder einer Aktualisierung vorliegt. Da der Wechseldatenträger die korrekte Anwendungs-Software und ggf. die Maschinenparameter-Grunddaten in vollständiger Form enthält, kann die Installation bzw. Aktualisierung auch jederzeit von ungeschultem Personal durchgeführt werden. Zwischen dem Datenaustauschanschluss und dem Wechseldatenträger ist eine direkte, d.h. galvanische, aber lösbare Steckverbindung zweckmäßig, beispielsweise um nach Austausch des Bedienpults den Wechseldatenträger wieder anbringen zu können. Der Wechseldatenträger ist eine passive Komponente, die durch Systemfehler oder mechanische Ausfälle im Steuerungssystem nicht betroffen ist, sich bequem transportieren lässt, und den groben Arbeitsbedingungen auf dem Straßenfertiger problemlos widersteht. Das Außengehäuse ist verstärkt, und/oder abgeschirmt ausgebildet, um hohe Datensicherheit und Verfügbarkeit zu gewährleisten. Dabei weist der Wechseldatenträger ein robustes, vorzugsweise etwa zylindrisches Kunststoffgehäuse auf, das verstärkt und/oder abgeschirmt ist, um baumaschinentauglich zu sein. Die Steckverbindung ist durch einen Schraub- oder Bajonettverschluss gegen zufälliges oder unbefugtes Lösen gesichert, und auch gegen Außeneinflüsse geschützt.

Im Straßenfertiger ist der Wechseldatenträger ein mitgeliefertes Zubehörteil zum redundanten und sicheren Bereithalten zumindest der Anwendungssoftware für Systemstarts oder für den Fall eines Komponententausches. Die Daten sind gesichert und können durch Vorgänge im Steuerungssystem nicht gefährdet werden. Die Installation der Daten ist auch durch Ungeübte durchführbar oder erfolgt sogar automatisch.

Im Außengehäuse ist neben der Mikrospeichereinheit auch eine Speicherlogik enthalten.

Bei einer speziellen Ausführungsform ist an einem Kragenabschnitt des Außengehäuses eine Überwurfmutter gehaltert, mit der die Steckverbindung nach Anbringen des Wechseldatenträgers gesichert und geschützt wird. Gegebenenfalls lässt sich dieser Verschluss sogar absperren.

Der Wechseldatenträger, der beim Hersteller des Straßenfertigers oder bei einer entsprechenden Servicestelle geladen worden ist, lässt sich problemlos so intelligent ausbilden, dass er zusätzlich zum Abspeichern von Diagnose- und Einbauinformationsdaten ausgebildet ist, und zwar entweder, um diese in die Zentralrecheneinheit zu überspielen, oder aus dieser zu überspielen und zu speichern. Die Auswertung kann dann zu beliebiger Zeit und an einem beliebigen Ort vorgenommen werden.

Mit dem Wechseldatenträger können ferner auch von ungeschultem Personal Diagnose- oder Einbauinformationen über den Datenaustauschanschluss in die Zentralrecheneinheit exportiert oder aus dieser importiert werden, entweder automatisch oder über die Zentralrecheneinheit veranlasst.

Da an dem Straßenfertiger eine Service-Schnittstelle vorgesehen ist, die zum Anschluss externer Diagnosegeräte, z. B. eines Service-Laptops, nutzbar ist, können auch unter Verwendung des Diagnosegerätes die Anwendungs-Software in der Zentralrecheneinheit, und zweckmäßig auch die Parameter-Grunddaten, nach Bedarf aktualisiert werden. Hierfür weist der Straßenfertiger zusätzlich zum Datenaustauschanschluss für den Wechseldatenträger am oder im Bedienpult eine mit der Zentralrecheneinheit verbundene Diagnoseschnittstelle auf, die entweder zur direkten galvanischen oder zur drahtlosen Datenübermittlung ausgebildet ist. An der Diagnoseschnittstelle lässt sich ein externes Diagnosegerät anschließen, mit dem zumindest in der Zentralrecheneinheit bereits installierte Anwendungs-Software aktualisiert werden kann.

Ferner lassen sich mit dem externen Diagnosegerät und über die Serviceschnittstelle jegliche im Steuerungssystem verfügbare Informationen online visualisieren, falls dies zur Überprüfung, für Aufzeichnungszwecke, oder nach Störungsfällen zweckmäßig ist. Auch dies kann von ungeschultem Personal vorgenommen werden, weil die Zentralrecheneinheit schon vorab für diese Routine programmiert sein kann. Die Aktualisierung bereits installierter Anwendungs-Software, und gegebenenfalls von Maschinenparameter-Grunddaten, lässt sich mit dem Diagnosegerät bequem auch über die Diagnoseschnittstelle durchführen. Ferner können, falls erforderlich, auch von ungeschultem Personal Diagnose- und EinbauInformationsdaten mit dem Diagnosegerät über die Diagnoseschnittstelle in die oder aus der Zentralrecheneinheit exportiert bzw. importiert werden.

Dabei kann über die Diagnoseschnittstelle eine drahtlose Datenübertragung durchgeführt werden, vorzugsweise entsprechend dem DFÜ-, Bluetooth- oder WLAN-Standard, gegebenenfalls sogar außerhalb des Straßenfertigers. Um eine drahtlose Datenübermittlung durchführen zu können, ist zweckmäßig am Bedienpult ein der Diagnose-Schnittstelle zugeordnetes Gerät zur drahtlosen Datenübertragung angeordnet. Dies kann ein Gerät entsprechend dem DFÜ-, Bluetooth- oder WLAN-Standard sein.

Anhand der Zeichnung werden Ausführungsformen des Erfindungsgegenstandes erläutert. Es zeigen:
- Fig. 1: eine Seitenansicht einer Baumaschine, die als Beispiel ein Straßenfertiger ist,
- Fig. 2: eine Detail-Perspektivansicht eines Bedienpults eines elektronischen Steue- rungssystems der Baumaschine,
- Fig. 3: eine Perspektivansicht eines Wechseldatenträgers,
- Fig. 4: eine Perspektivansicht eines Datenaustauschanschlusses für den Wechseldaten- träger, und einer Serviceschnittstelle, beispielsweise an dem Bedienpult von Fig. 2, und
- Fig. 5: den am Datenaustauschanschluss angebrachten Wechseldatenträger bei nicht besetzter, jedoch freigelegter Serviceschnittstelle.

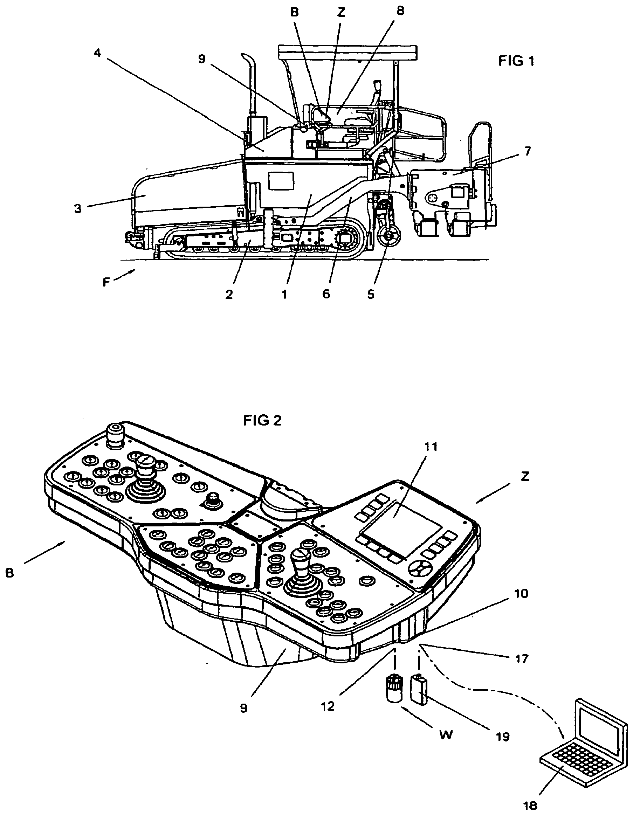

In Fig. 1 wird als Beispiel für eine Baumaschine der hier interessierenden Art ein Straßenfertiger F gezeigt. Das erfindungsgemäße Prinzip ist jedoch auch auf andere Baumaschinen wie Beschicker, Grader, Straßenemeuerungsmaschinen, Straßenfräsmaschinen, Bagger oder dgl. anwendbar.

Der Straßenfertiger F ist mit einem Chassis 1 auf einem Fahrwerk 2 fahrbar und weist einen vorliegenden Gutbunker 3 auf, hinter dem sich eine Primärantriebsquelle 4 befindet. Am hinteren Ende des Chassis 1 ist eine Querverteilvorrichtung 5, z.B. ein Schneckenmechanismus vorgesehen, hinter dem sich eine Einbaubohle 7 befindet, die mit Auslegern 6 an das Chassis angeschlossen ist. Oberseitig ist hinter der Primärantriebsquelle 4 ein Führerstand 8 vorgesehen, in dem sich ein Bedienpult B befindet, in welchem beispielsweise eine Zentralrecheneinheit Z einer elektronischen Steuerungsvorrichtung des Straßenfertigers F untergebracht ist. Zu elektrischen Subsystemen des Straßenfertigers F verläuft vom Bedienpult B eine Übertragungsstrecke 9. Die elektronische Steuerungsvorrichtung enthält ein Bussystem, z.B. wenigstens einen Feldbus, an welchen mehrere zentrale oder dezentrale speicherprogrammierbare Steuerungs- und Controller-Einheiten, 10-Module, mehrere Außensteuerstände, eine Motorelektronik, eine Generatorelektronik, und diverse Sensorik- und Aktorik-Subsysteme direkt oder indirekt angeschlossen sind. Diese Komponenten des Steuersystems werden zum Betreiben des Straßenfertigers F für Steuer-, Regel- und Überwachungsfunktionen benutzt, wobei zumindest in einem Speicherbereich der Zentralrecheneinheit Z Anwendungs-Software und gegebenenfalls Maschinenparameter-Grunddaten gespeichert sind. Das Einspielen zumindest der Anwendungs-Software in das Steuerungssystem für alle Komponenten, die Anwendungs-Software benötigen, wird von der Zentralrecheneinheit durchgeführt. Diese prüft beispielsweise bei jedem Systemstart, ob auf allen Komponenten die korrekte Anwendungs-Software-Version vorhanden ist, und lädt gegebenenfalls dann die Anwendungs-Software über den Feldbus in die Komponenten hinein. D.h., in der Zentralrecheneinheit werden sämtliche Anwendungsprogramme vorgehalten wie die Anwendungs-Software und Maschinenparameter-Grunddaten, damit, z.B. nach Austausch einer Komponenten im Servicefall dieser Komponente die benötigte Anwendungs-Software und die Maschinenparameter-Grunddaten überspielt werden können.

Fig. 2 ist eine Perspektivansicht des Bedienpults B im Führerstand 8 von Fig. 1. Das Bedienpult B dient zur Prozessvisualisierung und weist neben Bedienungselementen eine Eingabe- und Anzeigesektion 11 auf, beispielsweise mit mindestens einem Display oder einer Touchscreen oder dgl. Die Zentralrecheneinheit Z ist in das Bedienpult B eingebaut. Am Bedienpult B, beispielsweise in einer Bodenwand 10 (oder in der Rückwand oder Seitenwand) ist an geeigneter Stelle ein Datenaustauschanschluss 12 vorgesehen, an welchem ein Wechseldatenspeicher W abnehmbar angebracht ist. Der Wechseldatenspeicher W ist baumaschinentauglich ausgebildet und enthält zumindest eine Mikrospeichereinheit, und, vorzugsweise, eine Speicherlogik. Der Wechseldatenträger W ist mobil und hat ein handliches Format bei geringem Gewicht.

Der Wechseldatenträger W ist über den Datenaustauschanschluss 12 mit der Zentralrecheneinheit Z verbunden, und enthält die Anwendungs-Software und ggfs. Maschinenparameter-Grunddaten, um diese in die Zentralrecheneinheit Z zu überspielen. Ist der Wechseldatenträger W bei einem Systemstart angebracht, dann wird automatisch zumindest die Anwendungs-Software in die Zentralrecheneinheit überspielt. Das Überspielen kann auch ausgelöst werden durch das Anbringen des Wechseldatenträgers W, oder kann über die Anzeige- und Eingabesektion 11 bei angebrachtem Wechseldatenträger veranlasst werden. Somit ist eine Aktualisierung der Anwendungs-Software, die wiederholte oder erstmalige Installation, auch von Maschinenparameter-Grunddaten, jederzeit möglich und auch nach einem Austausch von Steuerungskomponenten, wobei das notwendige Überspielen der Anwendungs-Software und der Maschinenparameter-Grunddaten z.B. durch einfaches Anstecken des Wechseldatenträgers auch von Laien durchführbar ist.

Ferner ist am Bedienpult B eine Service-Schnittstelle 17 vorgesehen, an der ein externes Diagnosegerät 18 galvanisch angeschlossen werden kann, beispielsweise ein Service-Laptop. Alternativ ist über die Service-Schnittstelle 17 auch eine drahtlose Datenübermittlung möglich, falls am Bedienpult ein Gerät 19 angebracht ist, das beispielsweise dem DFÜ-, Bluetooth- oder WLAN-Standard entspricht, wobei dann das im Diagnosegerät 18 entsprechend ausgestattet sein muss.

Die Serviceschnittstelle 17 ist mit der Zentralrecheneinheit verbunden. Mit dem Diagnosegerät 18 kann eine Aktualisierung der Anwendungs-Software in der Zentralrecheneinheit Z durchgeführt werden. Ferner lassen sich mittels des Diagnosegeräts 18 Diagnose- oder Einbauinformationen in das Steuerungssystem importieren oder aus diesem exportieren. Zusätzlich kann die Service-Schnittstelle 17 mit dem externen Diagnosegerät 18 auch zur Online-Visualisierung aller im Steuerungssystem verfügbaren Informationen verwendet werden.

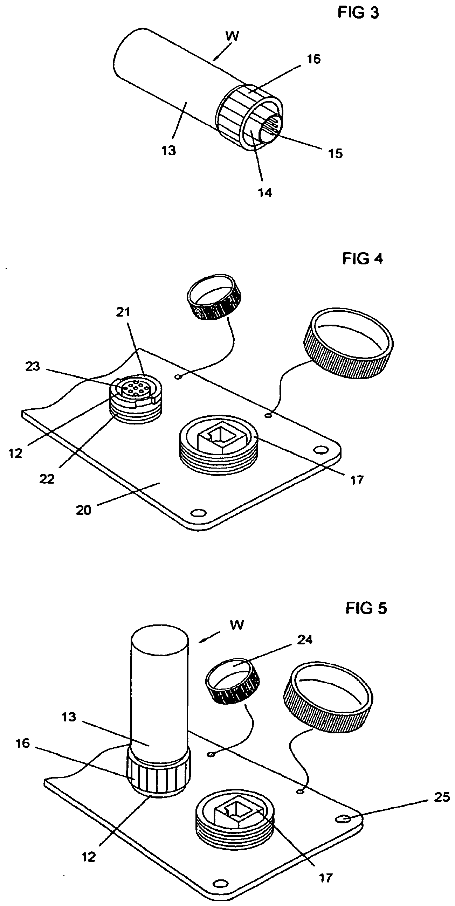

Der Wechseldatenträger W in Fig. 3 weist ein robustes baumaschinentaugliches, beispielsweise annähernd zylindrisches, Außengehäuse 13, beispielsweise aus Kunststoff, auf, in dem die zumindest eine Mikrospeichereinheit und gegebenenfalls die Speicherlogik sicher untergebracht sind. Das Außengehäuse 13 ist verstärkt und/oder abgeschirmt. An einem Ende des Außengehäuses 13 ist ein Stecker 14 angeformt, in welchem sich Anschlusskontakte 15 befinden. Ferner ist, zweckmäßigerweise, am Außengehäuse 13 eine Überwurfmutter 16 drehbar angebracht, die zur Sicherung und zum Schutz der Steckverbindung nach Anbringen des Wechseldatenträgers W am Datenaustauschanschluss 12 angezogen wird. Die Überwurfmutter 16 ist gegebenenfalls absperrbar. Anstelle einer Schraubverbindung könnte auch ein Bajonett- oder Spannbügelverschluss benutzt werden.

In Fig. 4 ist eine Abdeckplatte 20 beispielsweise in der Rücken- oder Bodenwand 10 (oder der Seitenwand) des Bedienpults B mit Befestigungsschrauben festgelegt. Der Datenaustauschanschluss 12, der als Steckanschluss mit Steckkontakten 23 ausgebildet ist, und die Serviceschnittstelle 17, sind in der Abdeckplatte 20 beispielsweise einander benachbart platziert. Zum Schutz der Steckkontakte 23 und der Steckverbindung ist ein Schutzkragen 21 mit einem Außengewinde 22 für die Überwurfmutter 16 vorgesehen. Die Serviceschnittstelle 17 ist ähnlich ausgebildet, ist aber zweckmäßigerweise größer oder kleiner dimensioniert, um einen Fehlanschluss des Wechseldatenträgers W auszuschließen.

In Fig. 5 ist der Wechseldatenträger W angebracht und durch die Überwurfmutter 16 gesichert. Eine Schutzkappe 24, die bei nicht benutztem Datenaustauschanschluss 12 auf den Schutzkragen 21 aufgeschraubt wird, ist gelöst. Die Abdeckplatte 20 kann mit Befestigungselementen 25 festgelegt sein, damit sie, gegebenenfalls, bei einem Servicefall demontiert und an der neuen Austauschkomponenten wieder angebracht werden kann.

Der Datenaustauschanschluss 12 für den Wechseldatenträger W und auch die Serviceschnittstelle 17 könnten an anderer geeigneter Position im Straßenfertiger F angeordnet sein, beispielsweise an einer Elektronikbox der elektronischen Steuerungsvorrichtung. Bei einem Austausch des Bedienpults mit der Zentralrecheneinheit wird der Wechseldatenträger W an das neue Bedienpult angesteckt, um die Anwendungs-Software und ggf. die Maschinenparameter-Grunddaten beim Anstecken, bei einem Systemstart oder auf Veranlassung durch die Zentralrecheneinheit Z, zu überspielen. Der Wechseldatenträger W kann ferner zusätzlich so ausgelegt sein, dass er auch Diagnose- oder Einbauinformationen aus dem Steuerungssystem abzuspeichem vermag. Diese Diagnose- oder Einbauinformationen können entweder über den Datenaustauschanschluss 12 in die Zentralrecheneinheit Z bzw. das Steuerungssystem exportiert oder aus diesem importiert werden.

## Patentansprüche

1. Straßenfertiger (F) mit einem elektronischen Steuerungssystem, das ein Bedienpult (B) mit einer Anzeige- und Eingabesektion (11), eine Zentralrecheneinheit (Z) mit zentralem Datenspeicher, und ein Bussystem umfasst, an das elektronische Subsysteme zum Betätigen und/oder Überwachen von Funktionskomponenten unter Verwendung in der Zentralrecheneinheit (Z) installierter Anwendungs-Software und gegebenenfalls Parameter-Grunddaten angeschlossen sind, **dadurch gekennzeichnet, dass** am oder im Bedienpult (B) des Straßenfertigers (F) ein mit der Zentralrecheneinheit (Z) verbundener, bidirektionaler Datenaustauschanschluss (12) vorgesehen ist, und dass am Datenaustauschanschluss (12) ein mit einem Stecker (14) versehener und einem verstärkten und/oder abgeschirmten Außengehäuse (13) baumaschinentauglich ausgebildeter, mobiler Wechseldatenträger (W) angesteckt und zum jederzeitigen Installieren oder Aktualisieren gegen Lösen durch einen Schraub- oder Bajonettverschluss gesichert ist, wobei das Außengehäuse (13) eine Mikrospeichereinheit enthält, in welchem Wechseldatenträger (W) die vollständige Anwendungs-Software und gegebenenfalls die Parameter-Grunddaten gespeichert und aus welchem bei einem Systemstart oder auf Veranlassung der Zentralrecheneinheit (Z) die Anwendungs-Software und gegebenenfalls die Parameter-Grunddaten zum Installieren und Aktualisieren in die Zentralrecheneinheit (Z) überspielbar sind,
wobei zusätzlich zum Datenaustauschanschluss (12) am oder im Bedienpult (B) des Straßenfertigers (F) eine mit der Zentralrecheneinheit (Z) verbundene Diagnoseschnittstelle (17) zur direkten oder drahtlosen Datenübermittlung an ein externes Diagnosegerät (18) zumindest zum Aktualisieren in der Zentralrecheneinheit (Z) installierter Anwendungs-Software vorgesehen ist, und wobei an der Diagnoseschnittstelle (17) ein externes Diagnosegerät (18) anschließbar ist.

2. Straßenfertiger nach Anspruch 1, **dadurch gekennzeichnet, dass** im Außengehäuse (13) des Wechseldatenträgers (W) zusätzlich eine Speicherlogik enthalten ist.

3. Straßenfertiger nach Anspruch 1, **dadurch gekennzeichnet, dass** das Außengehäuse (13) etwa zylindrisch ausgebildet ist, vorzugsweise aus Kunststoff, dass an einem Kragenabschnitt des Außengehäuses (13) eine Überwurfmutter (16) gehaltert ist, und dass an dem Datenaustauschanschluss (12) an einem Schutzkragen ein Außengewinde (22) für die Überwurfmutter (16) vorgesehen ist.

4. Straßenfertiger nach Anspruch 1, **dadurch gekennzeichnet, dass** die Mikrospeichereinheit und die Speicherlogik des Wechseldatenträgers (W) zusätzlich zum Abspeichern von Diagnose-und Einbauinformationsdaten ausgebildet sind.

5. Straßenfertiger nach Anspruch 1, **dadurch gekennzeichnet, dass** am Bedienpult (B) ein der Diagnoseschnittstelle (17) zugeordnetes Gerät (19) zur drahtlosen Datenübertragung angeordnet ist, vorzugsweise entsprechend dem DFÜ-, Bluetooth- oder WLAN-Standard.

6. Straßenfertiger nach Anspruch 1, **dadurch gekennzeichnet, dass** mit dem Diagnosegerät (18) über die Diagnoseschnittstelle (17) Diagnose- und Einbauinformationsdaten in die Zentralrecheneinheit (Z) exportierbar oder aus der Zentralrecheneinheit (Z) importierbar sind.

## Claims

1. Road paver (F) having an electronic control system comprising an operating panel (B) including an indication and input section (11), a central computing unit (Z) including a central data store, and a bus system to which electronic sub-systems for actuating and/or monitoring function components by use of application software and optionally parameter base data installed in the central computing unit (Z) are connected, **characterised in that** a bidirectional data exchange port is provided at or within the operation panel (B) of the road paver (F), which data exchange port (12) is connected with the central computing unit (Z), and that a mobile change data carrier (W) is plugged at the data exchange port (12) and is safeguarded against release by a threaded closure or a bayonet closure for installation or update at any time, the change data carrier (W) having a plug (14) and being designed with a reinforced and/or shielded outer housing (13) for use in construction machines, the outer housing (13) accommodating a micro-storage unit, in which change data carrier (W) the complete application software and optionally the parameter base data are stored and out of which in case of a system start or upon initiation by the central computing unit (Z) the application software and optionally parameter base data are transmittable for installation and update into the central computing unit (Z),
wherein, in addition to the data exchange port (12) at or within the operation panel (B) of the road paver (F), a diagnostic interface (17) is provided, which is connected with the central computing unit (Z), for a direct or wireless data transmission to an external diagnostic device (18) at least for updating application software already installed in the central computing unit (Z), and that an external diagnostic device (18) is connectable to the diagnostic interface (17).

2. Road paver according to claim 1, **characterised in that** additionally a storage logic is contained in the outer housing (13) of the change data carrier (W).

3. Road paver according to claim 1, **characterised in that** the outer housing (13) is formed substantially cylindrically, preferably from plastic material, that at a collar portion of the outer housing (13) a cap nut (16) is secured, and that at a protecting collar of the data exchange port (12) an exterior thread (22) is provided for the cap nut (16).

4. Road paver according to claim 1, **characterised in that** the micro-storage unit and the storage logic of the change data carrier (W) additionally are designed for storing diagnostic data and working information data.

5. Road paver according to claim 1, **characterised in that** a device (19) apt for wireless data transmission is arranged at the operation panel (B) in association to the diagnostic interface (17), preferably for a data transmission corresponding to DFÜ, bluetooth or WLAN standards.

6. Road paver according to claim 1, **characterised in that** diagnostic and working information data can be exported with the diagnostic device (18) via the diagnostic interface (17) into the central computing unit (Z) or can be imported out of the central computing unit (Z).

## Revendications

1. Finisseuse (F) avec un système de commande électronique qui comprend un pupitre de commande (B) pourvu d'une section d'affichage et d'entrée (11), une unité de calcul centrale (Z) pourvue d'une mémoire de données centrale, et un système de bus, auquel sont connectés des sous-systèmes électroniques pour actionner et/ou surveiller des composants fonctionnels à l'aide d'un logiciel d'application, et éventuellement de données de base de paramètres installés dans l'unité de calcul centrale (Z), **caractérisé en ce qu'**il est prévu sur ou dans le pupitre de commande (B) de la finisseuse (F) une connexion bidirectionnelle d'échange de données (12) reliée à l'unité de calcul centrale (Z), et **en ce qu'**un support de données amovible (W) mobile et approprié pour une machine de chantier, avec une enveloppe extérieure (13) renforcée et/ou blindée et pourvue d'une fiche (14) est branché à la connexion d'échange de données (12) et est bloqué à l'encontre d'un débranchement à l'aide d'un verrouillage à vis ou à baïonnette en vue de permettre à tout moment une installation ou une actualisation, dans laquelle l'enveloppe extérieure (13) contient une micro-unité de mémoire au sein du support de données amovible (W) de laquelle sont stockés le logiciel d'application complet et éventuellement les données de base de paramètres, et à partir de laquelle le logiciel d'application et éventuellement les données de base de paramètres sont aptes à être transférés dans l'unité de calcul centrale (Z), lors du démarrage de système ou à l'initiative de l'unité de calcul centrale (Z), en vue d'une installation ou d'une actualisation,
dans laquelle il est prévu, en plus de la connexion d'échange de données (12) sur ou dans le pupitre de commande (B) de la finisseuse (F), une interface de diagnostic (17) reliée à l'unité de calcul centrale (Z) pour la transmission directe ou sans fil de données à un appareil de diagnostic externe (18) au moins pour l'actualisation du logiciel d'application installé dans l'unité de calcul centrale (Z), et dans laquelle un appareil de diagnostic externe (18) est apte à être connecté à l'interface de diagnostic (17).

2. Finisseuse selon la revendication 1, **caractérisée en ce que** l'enveloppe extérieure (13) du support de données amovible (W) contient en supplément un système logique de mémoire.

3. Finisseuse selon la revendication 1, **caractérisée en ce que** l'enveloppe extérieure (13) est à peu près cylindrique, et de préférence en matière plastique, **en ce qu'**un écrou-raccord (16) est fixé à une embase de l'enveloppe extérieure (13), et **en ce qu'**il est prévu sur la connexion d'échange de données (12), sur une embase de protection, un filetage extérieur (22) pour l'écrou-raccord (16).

4. Finisseuse selon la revendication 1, **caractérisée en ce que** la micro-unité de mémoire et le système logique de mémoire du support de données amovible (W) sont conçus en supplément pour stocker des données de diagnostic et des données d'informations de montage.

5. Finisseuse selon la revendication 1, **caractérisée en ce qu'**il est prévu sur le pupitre de commande (B) un appareil (19) qui est associé à l'interface de diagnostic (17) en vue de la transmission de données sans fil, de préférence selon la norme DFÜ, Bluetooth ou WLAN.

6. Finisseuse selon la revendication 1, **caractérisée en ce qu**'avec l'appareil de diagnostic (18) des données de diagnostic et des données d'informations de montage sont aptes être exportées par l'intermédiaire de l'interface de diagnostic (17) vers l'unité de calcul centrale (Z) ou à être importées à partir de l'unité de calcul centrale (Z).
